# EUROPÄISCHE PATENTANMELDUNG

(11) **EP 0 862 981 A1**
(43) Veröffentlichungstag der Anmeldung: **09.09.1998**
(21) Anmeldenummer: 97114977.8
(22) Anmeldetag: 29.08.1997
(51) Int. Cl.: B29C 47/82

(54) **Anordnung zur Beheizung und Kühlung des Extrusionszylinders von Kunststoffverarbeitungs-maschinen**

(30) Priorität: 07.03.1997 DE 19709444
(71) Anmelder: Ihne & Tesch GmbH, 58507 Lüdenscheid (DE)
(72) Erfinder: Winterhoff, Bernd Dipl.-Ing., 58507 Lüdenscheid (DE); Bitter, Helmut, 58515 Lüdenscheid (DE)
(74) Vertreter: Köchling, Conrad, Dipl.-Ing.

(57) **Zusammenfassung**

Um eine Anordnung zur Beheizung und Kühlung des Extrusionszylinders von Kunststoffverarbeitungsmaschinen oder dergleichen Zylindern, bestehend aus auf den Mantel des Zylinders aufgebrachten Heiz- und Kühlelementen, die gegebenenfalls von einem Mantel umgeben sind, der von Kühlluft durchströmbar ist, zu schaffen, bei der Verzugserscheinungen bei der Aufheizung beziehungsweise Kühlung vermieden sind und bei der eine gleichmäßige Temperaturverteilung über den Zylinder erreicht wird, wird vorgeschlagen, **daß** auf den Zylindermantel Pufferelemente (2) aus gut wärmeleitendem Werkstoff aufgebracht sind, die in wärmeleitender Verbindung zueinander sind, daß auf die Pufferelemente (2) in ausgewählten Bereichen die Heizelemente (3), insbesondere Heizbänder, aufgelegt sind und die Pufferelemente (2) in anderen ausgewählten Bereichen mit Kühlkörpern (4) versehen oder einstückig mit diesen ausgebildet sind.

## Beschreibung

Die Erfindung betrifft eine Anordnung zur Beheizung und Kühlung des Extrusionszylinders von Kunststoffverarbeitungsmaschinen oder dergleichen Zylindern, bestehend aus auf den Mantel des Zylinders aufgebrachten Heiz- und Kühlelementen, die gegebenenfalls von einem Mantel umgeben sind, der von Kühlluft durchströmbar ist.

Eine derartige Anordnung ist im Stand der Technik bekannt. Dabei sind auf den zu beheizenden Zylindern abwechselnd Heizbänder und Kühlkörper aufgesetzt und verschraubt. Hieraus resultiert ein wesentlicher Nachteil, weil die Kühlung und die Heizung völlig voneinander getrennt sind, woraus ein Verzug bei der Aufheizung beziehungsweise Kühlung resultiert und wodurch eine ungleichmäßige Temperaturverteilung über die Länge des Zylinders entsteht.

Ausgehend von diesem Stand der Technik liegt der Erfindung die Aufgabe zugrunde, eine Anordnung gattungsgemäßer Art zu schaffen, bei der Verzugserscheinungen bei der Aufheizung beziehungsweise Kühlung vermieden sind und bei der eine gleichmäßige Temperaturverteilung über den Zylinder erreicht wird.

Zur Lösung dieser Aufgabe wird vorgeschlagen, daß auf den Zylindermantel Pufferelemente aus gut wärmeleitendem Werkstoff aufgebracht sind, die in wärmeleitender Verbindung zueinander sind, daß auf die Pufferelemente in ausgewählten Bereichen die Heizelemente, insbesondere Heizbänder, aufgelegt sind und die Pufferelemente in anderen ausgewählten Bereichen mit Kühlkörpern versehen oder einstückig mit diesen ausgebildet sind.

Dadurch, daß auf den Zylindermantel Pufferelemente aus gut wärmeleitendem Werkstoff, insbesondere Metall, aufgebracht sind, die einerseits in wärmeleitender Verbindung zueinander stehen und auf die andererseits in ausgewählten Bereichen die Heiz-elemente und in anderen Bereichen die Kühlkörper aufgebracht sind, wird eine gleichmäßige Temperaturverteilung bei der Kühlung und Erhitzung erreicht, weil das Pufferelement für eine gleichmäßige Wärmeverteilung über die Länge des aufzuheizenden oder zu kühlenden Zylinders sorgt. Infolgedessen ist auch eine höhere Kühlleistung übertragbar, da die bei höherer Kühlleistung im Stand der Technik auftretende Verzugsgefahr durch die Anordnung des Pufferelementes vermindert ist. Das Pufferelement deckt den Mantel des Zylinders, insbesondere Extrusionszylinders vollständig ab. Hierdurch wird insbesondere eine gleichmäßige Massetemperatur der im Zylinder befindliche Kunststoffmasse und eine gleichmäßige Temperaturführung erreicht, wobei hieraus eine Steigerung des Massedurchsatzes resultiert. Je nach Einsatzzweck kann die Anordnung der Kühlkörper und der Heizelemente beliebig erfolgen.

Bevorzugt ist vorgesehen, daß die Pufferelemente durch Ringsegmente gebildet sind.

Vorzugsweise sind die Pufferelemente halbringförmige Segmente, die radial auf den Zylindermantel aufsetzbar sind und auf diesem verspannbar oder verschraubbar sind.

Besonders bevorzugt ist vorgesehen, daß die Pufferelemente oder die Ringsegmente im Querschnitt T-förmig profiliert sind, wobei die Querstege benachbarter Elemente oder Segmente einander überlappend angeordnet sind und die dem Zylindermantel zugewandten Stirnflächen der Querstege oder Längsstege am Zylindermantel anliegen.

Durch diese Ausbildung ist eine gute wärmeleitende Verbindung zwischen den einzelnen Segmenten und zwischen dem Pufferelement insgesamt und dem Zylindermantel sichergestellt.

Bevorzugt ist zudem vorgesehen, daß die Kühlkörper als von den Elementen oder Segmenten radial abragende Stege ausgebildet sind.

Besonders bevorzugt ist vorgesehen, daß die Pufferelemente oder Segmente aus Aluminium oder Aluminiumlegierungen bestehen.

Zudem ist bevorzugt vorgesehen, daß die Segmente als Strangpreßprofile ausgebildet sind, die angeformte Rippen als Kühlkörper aufweisen oder auf die die elektrischen Heizelemente, insbesondere Heizwicklungen, aufgebracht sind.

Die Segmente können in einfacher Weise als Strangpreßprofile geformt werden, wobei die einzelnen Segmente dann zu dem gesamten Pufferelement zusammengefügt werden können. Dabei kann eine an sich bekannte zweischalige Heiz- und Kühleinrichtung geschaffen werden, deren eine Enden scharniermäßig verbunden sind und deren anderen Enden durch eine Klemm- oder Schraubverbindung miteinander verbindbar sind, so daß ein ringförmiges Kühl-Heizelement entsteht.

Ein Ausführungsbeispiel der Erfindung ist in der Zeichnung dargestellt und im folgenden näher beschrieben. Es zeigt:
- Figur 1: eine erfindungsgemäße Anordnung in Stirnansicht;
- Figur 2: desgleichen in Seitenansicht;
- Figur 3: eine Einzelheit im Schnitt gesehen.

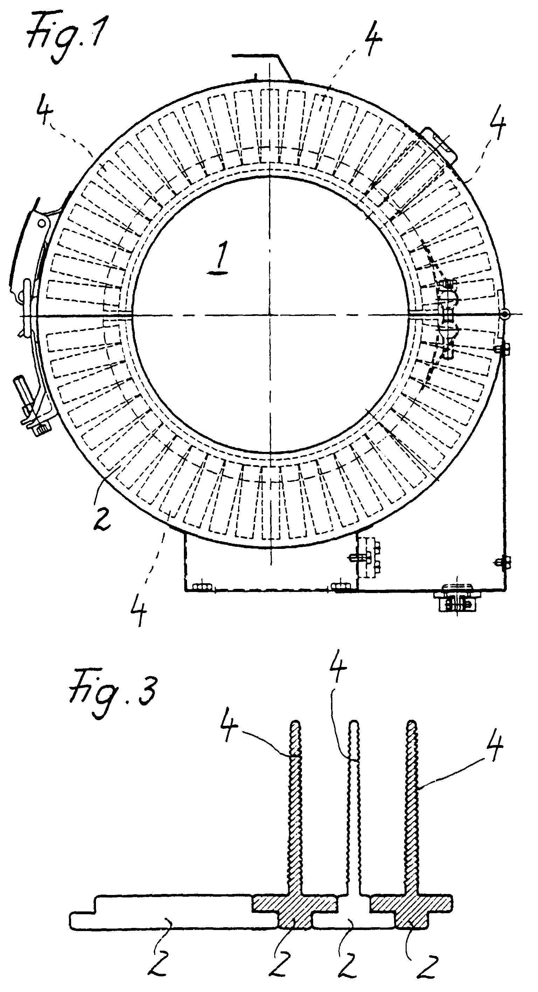

In der Zeichnung ist eine Anordnung zur Beheizung und Kühlung des Extrusionszylinders von Kunststoffverarbeitungsmaschinen oder dergleichen Zylindern gezeigt. Ein solcher Zylinder ist in der Ausbildung gemäß Figur 1 in der Mitte des ringförmigen Beheizungs- und Kühlungselementes bei 1 angeordnet. Die Anordnung besteht aus auf den Mantel des Zylinders aufbringbaren Heiz- und Kühlelementen, die gegebenenfalls von einem Mantel umgeben sind. Dieser Mantel ist von Kühlluft durchströmbar.

Radial innenliegend des Elementes, was in Figur 1 gezeigt ist, sind Pufferelemente 2 angeordnet, die in der Sollposition in wärmeleitender Verbindung zueinander stehen und in wärmeleitender Verbindung auf dem Zylindermantel aufliegen. Auf die Pufferelemente 2 sind in ausgewählten Bereichen die Heizelemente 3 in Form von elektrischen Heizbändern oder dergleichen aufgebracht. In anderen ausgewählten Bereichen sind die Pufferelemente 2 mit Kühlkörpern 4 versehen oder einstückig mit diesem ausgebildet.

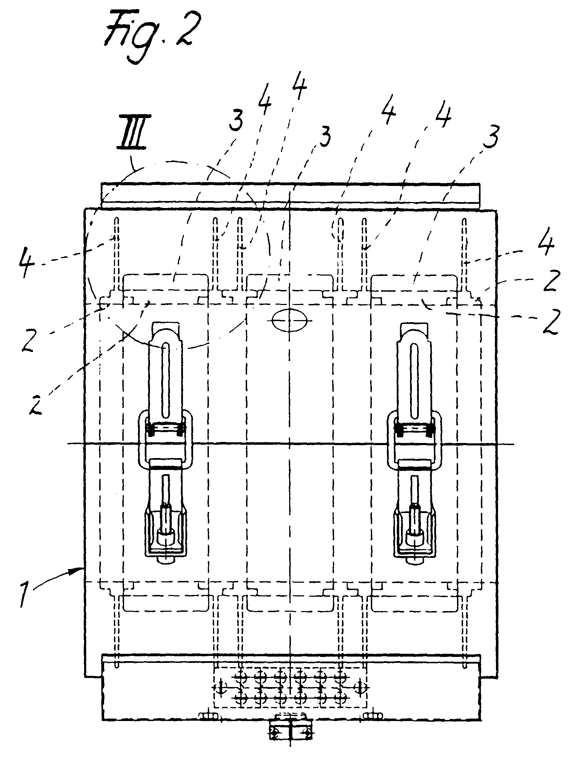

Die Pufferelemente 2 sind durch halbringförmige Segmente gebildet. Die Pufferelemente 2 sind im Querschnitt T-förmig profiliert, wie insbesondere aus Figur 3 ersichtlich ist, wobei die Querstege benachbarter Elemente 2 einander überlappend angeordnet sind und in wärmeleitendem Kontakt sind und die den Zylindermantel (radial innen) zugewandten Stirnflächen der Querstege oder Längsstege am Zylindermantel anliegen.

Die Kühlkörper 4 sind als von den Elementen abragende Stege ausgebildet. Vorzugsweise sind die Pufferelemente 2 aus Aluminium oder Aluminiumlegierungen hergestellt. Die Segmente 2 sind dabei vorzugsweise als Abschnitte von Strangpreßprofilen oder auch als Gußprofile ausgebildet, wobei Rippen als Kühlkörper 4 angeformt sind. Durch die erfindungsgemäße Ausbildung und Anordnung wird eine vergrößerte Abstrahlfläche des gesamten Pufferelementes, gebildet aus den Einzelelementen 2, erzeugt, wobei eine vollständige Abdeckung des Extrusionszylinders erfolgt. Durch die Anordnung des Puffers zwischen dem Mantel des Zylinders und den Heizelementen 3 beziehungsweise Kühlelementen 4 wird eine gleichmäßige Temperaturverteilung und Temperaturführung erreicht, was sich in einer gleichmäßigen Massetemperatur der im Extrusionszylinder befindlichen Masse auswirkt. Es ist hierdurch auch eine Steigerung des Massendurchsatzes möglich. Durch die segmentartige Ausbildung ist eine variable Anordnung der Kühlkörper und Heizelemente je nach Aufgabestellung möglich. Es ist auch eine einfache Montage und Herstellung gewährleistet.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Anordnung zur Beheizung und Kühlung des Extrusionszylinders von Kunststoffverarbeitungsmaschinen oder dergleichen Zylindern, bestehend aus auf den Mantel des Zylinders aufgebrachten Heiz- und Kühlelementen, die gegebenenfalls von einem Mantel umgeben sind, der von Kühlluft durchströmbar ist, **dadurch gekennzeichnet**, **daß** auf den Zylindermantel Pufferelemente (2) aus gut wärmeleitendem Werkstoff aufgebracht sind, die in wärmeleitender Verbindung zueinander sind, daß auf die Pufferelemente (2) in ausgewählten Bereichen die Heizelemente (3), insbesondere Heizbänder, aufgelegt sind und die Pufferelemente (2) in anderen ausgewählten Bereichen mit Kühlkörpern (4) versehen oder einstückig mit diesen ausgebildet sind.

2. Anordnung nach Anspruch 1, **dadurch gekennzeichnet**, **daß** die Pufferelemente (2) durch Ringsegmente gebildet sind.

3. Anordnung nach Anspruch 1 oder 2, **dadurch gekennzeichnet**, **daß** die Pufferelemente (2) oder die Ringsegmente im Querschnitt T-förmig profiliert sind, wobei die Querstege benachbarter Elemente (2) oder Segmente einander überlappend angeordnet sind und die dem Zylindermantel zugewandten Stirnflächen der Querstege oder Längsstege am Zylindermantel anliegen.

4. Anordnung nach einem der Ansprüche 1 bis 3, **dadurch gekennzeichnet**, **daß** die Kühlkörper (4) als von den Elementen (2) oder Segmenten radial abragende Stege ausgebildet sind.

5. Anordnung nach einem der Ansprüche 1 bis 4, **dadurch gekennzeichnet**, **daß** die Pufferelemente (2) oder Segmente aus Aluminium oder Aluminiumlegierungen bestehen.

6. Anordnung nach einem der Ansprüche 1 bis 5, dadurch gekennzeichnet, daß die Segmente (2) als Strangpreßprofile ausgebildet sind, die angeformte Rippen als Kühlkörper (4) aufweisen oder auf die die elektrischen Heizelemente (3), insbesondere Heizwicklungen, aufgebracht sind.
